(19) Europäisches Patentamt
European Patent Office
Office européen des brevets

(11) **EP 3 114 184 B1**

(12) **FASCICULE DE BREVET EUROPEEN**

(45) Date de publication et mention
de la délivrance du brevet:
**20.12.2017 Bulletin 2017/51**

(21) Numéro de dépôt: **15713972.6**

(22) Date de dépôt: **02.03.2015**

(51) Int Cl.:
*C09J 103/02* *(2006.01)*    *D04H 1/4218* *(2012.01)*
*C03C 25/32* *(2006.01)*    *D04H 1/587* *(2012.01)*
*D04H 1/64* *(2012.01)*

(86) Numéro de dépôt international:
**PCT/FR2015/050502**

(87) Numéro de publication internationale:
**WO 2015/132518 (11.09.2015 Gazette 2015/36)**

(54) **COMPOSITION DE LIANT POUR LAINE MINERALE**

BINDEMITTELZUSAMMENSETZUNG FÜR MINERALWOLLE

BINDER COMPOSITION FOR MINERAL WOOL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.03.2014 FR 1451826**

(43) Date de publication de la demande:
**11.01.2017 Bulletin 2017/02**

(73) Titulaire: **Saint-Gobain Isover
92400 Courbevoie (FR)**

(72) Inventeurs:
• **OBERT, Edouard**
 **60700 Fleurines (FR)**
• **KIEFER, Lionel**
 **21560 Arc-sur-Tille (FR)**

(74) Mandataire: **Saint-Gobain Recherche
Département Propriété Industrielle
39 Quai Lucien Lefranc
93300 Aubervilliers (FR)**

(56) Documents cités:
**WO-A1-2013/014399    US-A1- 2011 223 364**

EP 3 114 184 B1

**Description**

La présente invention concerne une composition d'encollage pour des produits isolants à base de laine minérale, en particulier de laine de verre ou de roche, contenant des sucres hydrogénés, au moins un acide polycarboxylique et une quantité importante d'au moins un époxysilane.

La fabrication de produits d'isolation à base de laine minérale comprend généralement une étape de fabrication des fibres de verre ou de roche par un procédé de centrifugation. Sur leur trajet entre le dispositif de centrifugation et le tapis de collecte des fibres, on vaporise sur les fibres encore chaudes une composition aqueuse d'encollage, également appelée liant, qui subit ensuite une réaction de thermodurcissement à des températures d'environ 200 °C.

Les résines phénoliques utilisées pendant plusieurs dizaines d'années en tant que liants sont remplacées de plus en plus par des produits issus de sources renouvelables et n'émettant pas, ou très peu, de formaldéhyde, composé considéré comme pouvant nuire à la santé humaine.

Il est ainsi connu, par exemple de US 2011/0223364, de lier des fibres minérales avec des compositions aqueuses d'encollage exemptes de formaldéhyde contenant, en tant que réactifs thermoréticulables, des hydrates de carbone et des acides polycarboxyliques.

Les compositions d'encollage à base de sucres réducteurs présentent toutefois l'inconvénient de donner lieu à des réactions de coloration (caramélisation, réaction de Maillard) qui rendent difficile, voire impossible, l'obtention de produits de couleur claire.

La Demanderesse a proposé dans ses demandes WO 2010/029266 et WO 2013/014399 des liants à base, non pas de sucres réducteurs, mais de sucres hydrogénés, également appelés alcools de sucres. Ces réactifs ont une stabilité thermique considérablement plus élevée que les sucres réducteurs et ne donnent pas lieu aux réactions de Maillard et/ou de caramélisation.

Les produits d'isolation à base de laine minérale et de cette nouvelle génération de liants « verts », sont toutefois relativement hygroscopiques et conservent moins bien leurs propriétés mécaniques au cours du temps que les produits plus colorés fabriqués avec des sucres réducteurs. Pour compenser la perte des propriétés mécaniques après une certaine période de vieillissement de ces produits d'isolation, il est généralement nécessaire d'augmenter la proportion de liant d'environ 10 à 20 %, ce qui augmente non seulement le coût du produit final mais altère également sa réaction au feu.

Au cours de ses recherches visant à améliorer les propriétés mécaniques des produits d'isolation à base de laine minérale encollée avec des liants « incolores », c'est-à-dire fabriqués à partir de sucres hydrogénés, la Demanderesse a constaté avec surprise que certains composés, connus en tant qu'agents de couplage, conduisent à une amélioration spectaculaire des propriétés mécaniques des produits d'isolation obtenus, à condition d'être utilisés à des concentrations supérieures à celles nécessaires à leur fonctionnement en tant qu'agent de couplage.

Il est largement connu et très courant d'utiliser des silanes fonctionnels en tant qu'agents de couplage pour améliorer l'adhésion de matériaux organiques sur des surfaces minérales telles que le verre. Un silane fonctionnel comporte généralement au moins une, de préférence deux ou trois fonctions alcoxysilyle hydrolysables, capables de réagir avec les groupes silanol à la surface du verre, et au moins une fonction réactive (oxirane, amine) portée par un groupe organique non hydrolysable, lié à l'atome de silicium par une liaison Si-C. Cette fonction organique est généralement choisie de manière à pouvoir réagir avec la phase organique.

Pour obtenir un effet de couplage liant-verre satisfaisant, il est généralement suffisant d'ajouter moins de 1 % en poids (de matières sèches) d'agent de couplage à la composition d'encollage. On trouve, certes, dans l'état de la technique des demandes de brevet qui envisagent des concentrations d'agent de couplage plus importantes (voir par exemple US 2011/0223364), mais les exemples et modes de réalisation préférés mentionnent généralement des concentrations proches de 0,5 %, ce qui est certainement motivé par le coût relativement important de ces composés.

Les agents de couplage les plus utilisés sont les aminosilanes. Ils sont relativement meilleur marché que les époxysilanes et présentent à pH neutre une stabilité chimique qui permet de préparer les compositions d'encollage longtemps par avance.

Les époxysilanes non seulement coûtent plus cher que les aminosilanes, mais présentent comme autre inconvénient que la fonction époxy s'hydrolyse assez rapidement en présence d'eau, donnant lieu à un diol beaucoup moins réactif.

La présente invention est basée sur la découverte assez surprenante que les époxysilanes, contrairement aux aminosilanes, améliorent considérablement la résistance au vieillissement de produits d'isolation à base de laine minérale et de liants contenant des sucres hydrogénés, lorsqu'ils sont utilisés à des concentrations au-delà d'environ 2 % en poids.

La présente invention a par conséquent pour objet une composition aqueuse d'encollage pour produits isolants à base de laine minérale, comprenant

(a) au moins un glucide choisi parmi les sucres réducteurs, les sucres hydrogénés et un mélange de ceux-ci, la proportion de sucres hydrogénés dans le glucide étant comprise entre 25 et 100 % en poids,

(b) au moins un acide polycarboxylique monomère ou un sel ou anhydride d'un tel acide,

(c) plus de 2,0 % en poids, rapporté à la somme des composants (a) et (b), d'au moins un époxysilane.

Le composant (a) de la composition d'encollage selon l'invention peut être constitué uniquement de sucres hydrogénés et être exempt de sucres réducteurs. Ce mode de réalisation est intéressant car il conduit à des produits isolants particulièrement peu colorés.

Le terme « glucide » a ici un sens plus large qu'usuellement, car il englobe non seulement les glucides au sens stricte, c'est-à-dire les sucres réducteurs ou hydrates de carbone de formule $C_n(H_2O)_p$ présentant au moins un groupe aldéhyde ou cétone (groupe réducteur), mais également les produits d'hydrogénation de ces hydrates de carbone où le groupe aldéhyde ou cétone a été réduit.

Par « sucre hydrogéné » on entend dans la présente invention l'ensemble des produits résultant de la réduction d'un saccharide choisi parmi les monosaccharides, disaccharides, oligosaccharides et polysaccharides et des mélanges de ces produits.

Le sucre hydrogéné est de préférence un produit d'hydrogénation d'un hydrolysat d'amidon.

Les hydrolysats d'amidon sont des produits obtenus par hydrolyse enzymatique et/ou acide d'amidon. Le degré d'hydrolyse est généralement caractérisé par l'équivalent dextrose (DE), défini par la relation suivante :

$$DE = 100 \times \left( \frac{\text{nombre de liaisons glycosidiques rompues}}{\text{nombre de liaisons glycosidiques dans l'amidon initial}} \right)$$

Les hydrolysats d'amidon préférés ont, avant l'étape d'hydrogénation, un DE compris entre 5 et 99, et avantageusement entre 10 et 80.

L'hydrogénation du saccharide peut être effectuée par les méthodes connues opérant dans des conditions de pression d'hydrogène et de température élevées, en présence d'un catalyseur choisi parmi les éléments des groupes IB, IIB, IVB, VI, VII et VIII du tableau périodique des éléments, de préférence dans le groupe comprenant le nickel, le platine, le palladium, le cobalt, le molybdène et leurs mélanges. Le catalyseur préféré est le nickel de Raney. L'hydrogénation transforme le sucre ou le mélange de sucres (hydrolysat d'amidon) en polyols ou alcools de sucre.

A titre d'exemples de sucres hydrogénés, on peut citer l'érythritol, l'arabitol, le xylitol, le sorbitol, le mannitol, l'iditol, le maltitol, l'isomaltitol, le lactitol, le cellobitol, le palatinitol, le maltotritol et les produits d'hydrogénation d'hydrolysats d'amidon.

On utilisera de préférence les produits d'hydrogénation d'hydrolysats d'amidon.

De préférence, le sucre hydrogéné ou le mélange de sucres hydrogénés est constitué majoritairement, c'est-à-dire à plus de 50 % en poids, de maltitol (produit d'hydrogénation du maltose, dimère de glucose résultant de l'hydrolyse enzymatique de l'amidon).

Dans un autre mode de réalisation, le composant (a) peut contenir jusqu'à 75 % en poids d'un ou plusieurs sucres réducteurs, en plus du ou des sucres hydrogénés. Les produits isolants à base de laine minérale obtenus avec une composition d'encollage présentant une certaine teneur en sucres réducteurs sont relativement plus colorés, mais peuvent présenter un réel intérêt économique lié au faible coût des sucres réducteurs ou de mélanges de sucres incomplètement hydrogénés.

La teneur en sucres hydrogénés du glucide (composant (a)) est de préférence au moins égale à 30 % en poids, en particulier au moins égale à 50 % en poids, et idéalement au moins égale à 70 % en poids.

Les sucres réducteurs englobent les oses (monosaccharides) et osides (disaccharides, oligosaccharides et polysaccharides).

A titre d'exemples de monosaccharides, on peut citer ceux comportant de 3 à 8 atomes de carbone, de préférence les aldoses et avantageusement les aldoses contenant 5 à 7 atomes de carbone. Les aldoses particulièrement préférés sont les aldoses naturels (appartenant à la série D), notamment les hexoses tels que le glucose, le mannose et le galactose.

Le lactose ou le maltose sont des exemples de disaccharides utilisables en tant que sucre réducteur.

Les polysaccharides utilisables pour la présente l'invention ont de préférence une masse molaire moyenne en poids inférieure à 100.000, de préférence inférieure à 50.000, avantageusement inférieure à 10.000.

De préférence, le polysaccharide renferme au moins un motif choisi parmi les aldoses précités, avantageusement le glucose. Sont particulièrement préférés les polysaccharides réducteurs qui sont constitués majoritairement (à plus de 50 % en poids) de motifs de glucose.

Le sucre réducteur peut notamment être un mélange de monosaccharides, d'oligosaccharides et de polysaccharides, notamment une dextrine.

Les dextrines sont des composés répondant à la formule générale $(C_6H_{10}O_5)_n$. Elles sont obtenues par hydrolyse partielle d'amidon. Leur DE est avantageusement compris entre 5 et 99, de préférence entre 10 et 80.

Le composant (a), à savoir le glucide constitué de sucres hydrogénés mélangés éventuellement à des sucres réducteurs, représente avantageusement de 30 à 70 % en poids, de préférence de 40 à 60 % en poids de matières sèches de la composition d'encollage.

Le composant (b) est un acide polycarboxylique monomère. Il peut s'agir d'un acide dicarboxylique, tricarboxylique ou tetracarboxylique.

Les acides dicarboxyliques englobent, par exemple, l'acide oxalique, l'acide malonique, l'acide succinique, l'acide glutarique, l'acide adipique, l'acide pimélique, l'acide subérique, l'acide azelaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, notamment contenant au moins un atome de bore ou de chlore, l'acide tétrahydrophtalique et ses dérivés, notamment contenant au moins un atome de chlore tel que l'acide chlorendique, l'acide isophtalique, l'acide téréphtalique, l'acide mésaconique et l'acide citraconique ;

Les acides tricarboxyliques englobent, par exemple l'acide citrique, l'acide tricarballylique, l'acide 1,2,4-butanetricarboxylique, l'acide aconitique, l'acide hémimellitique, l'acide trimellitique et l'acide trimésique ;

On peut citer comme acide tétracarboxylique, par exemple l'acide 1,2,3,4-butanetétracarboxylique et l'acide pyroméllitique.

On utilisera de préférence l'acide citrique.

Le composant (b), à savoir l'acide polycarboxylique monomère, représente avantageusement de 30 à 70 % en poids, de préférence de 40 à 60 % en poids de matières sèches de la composition d'encollage de la présente invention.

Le rapport en poids du composant (a) au composant (b) est de préférence compris entre 70/30 et 30/70, en particulier entre 60/40 et 40/60.

Comme expliqué en introduction, la présence d'une concentration importante d'un époxysilane est une caractéristique technique essentielle de la présente invention.

La composition d'encollage de la présente invention contient avantageusement de 2,1 à 7 % en poids, de préférence de 2,3 à 6 % en poids et en particulier de 2,5 à 5 % en poids et idéalement de 3 à 4,5 % en poids d'au moins un époxysilane, ces pourcentages étant exprimés par rapport à la somme des composants (a) et (b).

Plus la teneur en époxysilanes est importante, plus l'effet antivieillissement est notable. Le coût relativement élevé des époxysilanes conduit toutefois à limiter les quantités d'époxysilanes utilisées.

Il est toutefois probable que l'augmentation du prix de revient de la composition d'encollage, résultant de l'utilisation de concentrations importantes d'un époxysilane, soit compensée par la possibilité d'utiliser moins de composition d'encollage.

Les époxysilanes de la présente invention peuvent être des trialcoxysilanes ou des di-alcoxysilanes, c'est-à-dire ils peuvent comporter deux ou trois fonctions alcoxy hydrolysables en fonctions silanol. Les trialcoxysilanes sont particulièrement préférés.

Les groupes alcoxy sont avantageusement des groupes méthoxy ou éthoxy, les groupes méthoxy, plus réactifs que les groupes éthoxy, étant préférés.

L'époxysilane utilisé dans la présente invention pour améliorer la résistance au vieillissement de produits d'isolation à base de laine minérale liée par des liants à base de sucres hydrogénés, est avantageusement choisi dans le groupe formé par les 3-glycidyloxypropyl-trialcoxysilanes, 3-glycidoxypropyl-dialcoxy-alkylsilanes, époxycyclohexyléthyltrialcoxysilanes, époxycyclohexyléthyldialcoxyalkylsilanes.

Les 3-glycidyloxypropyl-trialcoxysilanes sont particulièrement intéressants et parmi ceux-ci la Demanderesse a obtenu d'excellents résultats avec le (3-glycidyloxypropyl)-triméthoxysilane, commercialisé par exemple sous la dénomination GLYMO par la société Evonik, sous la dénomination Z-6040 par la société Dow Corning ou encore sous la référence OFS-6040 par la société Xiameter.

La composition d'encollage peut comprendre en outre un catalyseur qui peut être choisi parmi les bases et les acides de Lewis, tels que les argiles, la silice colloïdale ou non, les amines organiques, les ammoniums quaternaires, les oxydes métalliques, les sulfates métalliques, les chlorures métalliques, les sulfates d'urée, les chlorures d'urée et les catalyseurs à base de silicates.

Le catalyseur peut également être un composé contenant du phosphore, par exemple un hypophosphite de métal alcalin, un phosphite de métal alcalin, un polyphosphate de métal alcalin, un hydrogénophosphate de métal alcalin, un acide phosphorique ou un acide alkylphosphonique. De préférence, le métal alcalin est le sodium ou le potassium.

Le catalyseur peut encore être un composé contenant du fluor et du bore, par exemple l'acide tétrafluoroborique ou un sel de cet acide, notamment un tétrafluoroborate de métal alcalin tel que le sodium ou le potassium, un tétrafluoroborate de métal alcalino-terreux tel que le calcium ou le magnésium, un tétrafluoroborate de zinc et un tétrafluoroborate d'ammonium.

De préférence, le catalyseur est l'hypophosphite de sodium, le phosphite de sodium ou un mélange de ces composés.

La quantité de catalyseur introduite dans la composition d'encollage représente généralement au plus 20 % en poids, avantageusement de 1 à 10 % en poids, rapporté au poids total des composants (a) et (b).

La composition d'encollage conforme à l'invention peut comprendre en outre les additifs conventionnels ci-après dans les proportions suivantes calculées sur la base de 100 parts en poids de composant (a) + (b) :

De 0 à 40 parts, de préférence de 4 à 25 parts, d'une huile ou émulsion d'huile,
De 0 à 5 parts d'un agent hydrophobe, en particulier une silicone,
De 0 à 20 parts d'un polyol différent des sucres hydrogénés,
De 0 à 30 parts d'urée, de préférence 0 à 20 parts,
De 0 à 30 parts d'une charge d'extension (*extender*) choisie parmi les dérivés de la lignine tels que le lignosulfonate d'ammonium (LSA) ou le lignosulfonate de sodium, et les protéines animales ou végétales.

Le rôle des additifs est connu et brièvement rappelé :

Les huiles sont des agents anti-poussières et des agents hydrophobes ; l'urée joue le rôle de plastifiant et permet en outre d'ajuster le temps de gel de la composition d'encollage afin d'éviter les problèmes de pré-gélification ; la charge d'extension est une charge organique soluble ou dispersible dans la composition d'encollage qui permet notamment de diminuer le coût de celle-ci.

L'agent hydrophobe est de préférence une silicone réactive, c'est-à-dire un polydiorganosiloxane portant au moins une fonction hydroxyle (silanol), carboxyle, anhydride, amine, epoxy ou vinyle apte à réagir avec l'un au moins des constituants de la composition d'encollage et/ou avec les groupes silanol de la surface du verre.

La silicone réactive est de préférence liquide à température ambiante. Sa masse molaire moyenne est généralement inférieure ou égale à 50 000, de préférence inférieure ou égale à 10 000.

De préférence, la silicone réactive comprend une fonction réactive, avantageusement une fonction silanol, à chacune de ses extrémités de chaîne.

La fonction réactive de la silicone réactive peut être bloquée par un groupement protecteur qui libère ladite fonction réactive sous l'effet de la chaleur. La proportion de silicone réactive dans la composition d'encollage varie généralement de 0,1 à 5 parts, de préférence de 0,3 à 3 parts, avantageusement de 0,5 à 2,5 parts et mieux encore de 0,7 à 1,8 part en poids, pour 100 parts en poids de la somme des composants (a) et (b).

La préparation de la composition d'encollage est effectuée par simple mélange des constituants précités avec de l'eau.

La composition d'encollage est destinée à être appliquée sur des fibres minérales, notamment des fibres de verre ou de roche.

La présente invention a également pour objet un procédé de fabrication d'un produit isolant à base de laine minérale, comprenant

- l'application d'une composition aqueuse d'encollage telle que décrite ci-dessus sur des fibres de laine minérale, et
- l'évaporation de la phase solvant de la composition aqueuse d'encollage et le durcissement thermique du résidu non volatile de la composition.

De manière classique, la composition d'encollage est projetée par pulvérisation sur les fibres minérales à la sortie du dispositif centrifuge et avant leur collecte sur l'organe récepteur sous la forme d'une nappe de fibres qui est ensuite traitée à une température permettant la réticulation de l'encollage et la formation d'un liant infusible. La réticulation de l'encollage selon l'invention se fait à une température comparable à celle d'une résine formol-phénolique classique, à une température supérieure ou égale à 110°C, de préférence supérieure ou égale à 130°, et avantageusement supérieure ou égale à 140°C.

La grande réactivité de l'epoxysilane interdit la préparation d'une composition d'encollage longtemps à l'avance. Dans un mode de réalisation préféré le procédé de la présente invention comprend par conséquent une étape de préparation de la composition aqueuse d'encollage, mise en oeuvre moins de 24 heures, de préférence moins de 4 heures, en particulier moins de 1 heure, et idéalement moins de 15 minutes avant l'étape d'application sur les fibres, l'epoxysilane étant de préférence mélangé à la composition d'encollage aqueuse contenant tous les autres ingrédients.

La composition d'encollage a avantageusement un pH compris entre 2 et 4, en particulier entre 2,5 et 3,5, idéalement proche de 3.

Les produits isolants acoustiques et/ou thermiques obtenus par le procédé selon l'invention à partir de ces fibres encollées constituent aussi un objet de la présente invention.

Ces produits se présentent généralement sous la forme d'un matelas ou d'un feutre de laine minérale, de verre ou de roche, ou encore d'un voile de fibres minérales, également de verre ou de roche, destiné notamment à former un revêtement de surface dudit matelas ou dudit feutre. Lorsque le composant (a) contient une très faible proportion de sucres réducteurs, les produits présentent une couleur blanche particulièrement avantageuse.

En outre, les produits isolants présentent une grande résistance au développement de microorganismes, notamment de moisissures, qui est due au caractère non-fermentescible des sucres hydrogénés.

## Exemple 1

### Liant à base de sucres hydrogénés

On prépare des compositions d'encollage comprenant les constituants figurant dans le Tableau 1 exprimés en parts pondérales.

Les compositions d'encollage sont préparées en introduisant, dans un récipient, de l'eau (environ 80 % de la composition finale), le sucre hydrogéné (sirop de maltitol), l'acide citrique, l'hypophosphite de sodium (catalyseur), l'émulsion d'huile anti-poussière, l'émulsion de silicone, et pour finir l'époxysilane (ou l'aminosilane comparatif) sous une agitation vigoureuse jusqu'à dissolution complète des constituants.

On fabrique de la laine de verre par la technique de la centrifugation interne dans laquelle la composition de verre fondu est transformée en fibres au moyen d'un outil dénommé « assiette de centrifugation », comprenant un panier formant chambre de réception de la composition fondue et une bande périphérique percée d'une multitude d'orifices : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage.

De façon classique, une couronne de pulvérisation d'encollage est disposée au-dessous de l'assiette de fibrage de façon à répartir régulièrement la composition d'encollage sur la laine de verre venant d'être formée.

La laine minérale ainsi encollée est collectée sur un convoyeur à bande équipé de caissons d'aspiration internes qui retiennent la laine minérale sous forme d'un feutre ou d'une nappe à la surface du convoyeur. Le convoyeur circule ensuite dans une étuve maintenue à 270°C où les constituants de l'encollage polymérisent pour former un liant. Le produit isolant obtenu présente une densité nominale égale à 17,5 kg/m$^3$, une épaisseur nominale d'environ 75 mm et une perte au feu de l'ordre de 5 %.

Les propriétés des compositions d'encollage figurant dans le Tableau 1 suivant sont évaluées comparativement à une composition d'encollage classique renfermant une résine formol-phénolique et de l'urée (Référence) préparée conformément à l'exemple 2, essai 1 de WO01/96254 A1.

La résistance en traction est mesurée selon la norme ASTM C 686-71T sur un échantillon découpé par estampage dans le produit isolant. L'échantillon a la forme d'un anneau de 122 mm de longueur, 46 mm de largeur, un rayon de courbure de la découpe du bord extérieur égal à 38 mm et un rayon de courbure de la découpe du bord intérieur égal à 12,5 mm.

L'échantillon est disposé entre deux mandrins cylindriques d'une machine d'essais dont l'un est mobile et se déplace à vitesse constante. On mesure la force de rupture F de l'échantillon et on calcule la résistance en traction RT, définie par le rapport de la force de rupture F (en Newton) à la masse de l'échantillon (en grammes).

La résistance en traction est mesurée immédiatement après la fabrication (résistance en traction initiale) et après un vieillissement accéléré dans un autoclave à une température de 105°C sous 100 % d'humidité relative pendant 15 minutes.

La « reprise d'épaisseur » indique l'élasticité en compression du produit final. Pour la mesurer on applique, pendant un temps donné, une pression de compression telle que l'épaisseur soit réduite à 1/4,8 de sa valeur initiale. Après relâchement de cette pression de compression, on mesure de nouveau l'épaisseur. La reprise d'épaisseur est le rapport de l'épaisseur mesurée après relâchement de la pression de compression à l'épaisseur initiale.

**Tableau 1**

| Echantillon | 1 | 2 | 3 | 4* | Référenc e |
|---|---|---|---|---|---|
| Résine phénolique R225 | - | - | - | - | 100 |
| Sucre hydrogéné (Maltilite® 5575) | 48 | 48 | 48 | 48 | - |
| Acide citrique | 52 | 52 | 52 | 52 | - |
| Hypophosphite de sodium | 5 | 5 | 5 | 5 | - |
| Emulsion d'huile anti-poussière (HydroWax® 88) | 9,5 | 9.5 | 9.5 | 9.5 | 9.5 |
| Sulfate d'ammonium | - | - | - | - | 3 |
| Emulsion de silicone (DC1581) | 2,1 | 2,1 | 2,1 | 2,1 | - |

(suite)

| Echantillon | 1 | 2 | 3 | 4* | Référenc e |
|---|---|---|---|---|---|
| Aminosilane | 0,5 | - | - | - | 0.5 |
| Epoxysilane (GLYMO®) | - | 0,5 | 1,5 | 3 | - |
| RT (en N/g) | | | | | |
| Avant vieillissement | 4,5 | 4,3 | 4,5 | **5,0** | 5,0 |
| Après vieillissement | 2,9 | 3,1 | 3,6 | **4,2** | 4,4 |
| Perte au feu | 5,2 | 5,2 | 5,2 | 5,2 | 4,7 |
| Reprise d'épaisseur (%) | | | | | |
| Après 1 heure | 108 | 106 | - | 106 | 107 |
| Après 30 jours | 98 | 97 | 96 | 96 | 102 |
| *selon l'invention | | | | | |

On peut constater que la résistance en traction de l'échantillon 4 préparé conformément à l'invention présente une résistance en traction avant vieillissement équivalente à celle de l'échantillon de référence, tandis que tous les échantillons comparatifs (n° 1 - 3) présentent des résistances en traction avant vieillissement inférieures d'au moins 10 % à celles de l'échantillon de référence.

Par ailleurs, la perte de la résistance en traction après vieillissement est significativement inférieure pour l'échantillon selon l'invention que pour les trois échantillons comparatifs.

Ces résultats montrent que l'utilisation d'une concentration importante d'un époxysilane (3% de GLYMO) permet de réduire significativement la perte de résistance en traction d'un produit d'isolation préparé avec un liant à base de sucres hydrogénés uniquement.

La valeur de la reprise d'épaisseur ne semble pas dépendre de la concentration de l'époxysilane.

## Exemple 2

Liant à base de sucres hydrogénés et de sucres réducteurs

On procède de la manière décrite à l'exemple 1 mais en utilisant, en tant que glucide, un mélange d'un sucre hydrogéné (sirop de maltitol) et d'un sucre réducteur (sirop de glucose). Le Tableau 2 spécifie les fractions pondérales des compositions d'encollage utilisées et les propriétés mécaniques des échantillons de laine minérale obtenus.

**Tableau 2**

| Echantillon | 5 | 6 | 7 | 8 | 9 | 10 | 11* | 12* |
|---|---|---|---|---|---|---|---|---|
| Sucre réducteur (Roclys® C3072S) | 31 | 31 | 31 | 31 | 31 | 31 | 31 | 31 |
| Sucre hydrogéné (Maltilite® 5575) | 24 | 24 | 24 | 24 | 24 | 24 | 24 | 24 |
| Acide citrique | 45 | 45 | 45 | 45 | 45 | 45 | 45 | 45 |
| Hypophosphite de Na | 5 | 5 | 5 | 5 | 5 | 5 | 5 | 5 |
| Emulsion d'huile (HydroWax® 88) | 9,5 | 9,5 | 9,5 | 9,5 | 9,5 | 9,5 | 9,5 | 9,5 |
| Emulsion de silicone (DC1581) | 2,1 | 2,1 | 2,1 | 2,1 | 2,1 | 2,1 | 2,1 | 2,1 |
| Aminosilane | 0,5 | 1 | 2 | 3 | - | - | - | - |
| Epoxysilane | - | - | - | - | 0,5 | 1 | 2,1 | 3 |

(suite)

| Echantillon | 5 | 6 | 7 | 8 | 9 | 10 | 11* | 12* |
|---|---|---|---|---|---|---|---|---|
| RT (en N/g) | | | | | | | | |
| Avant vieillissement | 4,3 | 4,3 | 4,1 | 4,1 | 4,3 | 4,2 | **4,3** | **4,5** |
| Après vieillissement | 3,1 | 3,4 | 3,4 | 3,2 | 3,4 | 3,1 | **3,6** | **3,7** |
| Perte au feu | 5,2 | 5,2 | 5,2 | 5,2 | 5,2 | 5,2 | 5,2 | 5,2 |
| Reprise d'épaisseur (%) | | | | | | | | |
| Après 1 heure | 103 | 107 | 108 | 108 | 106 | 104 | 107 | 107 |
| Après 30 jours | 91 | 93 | 94 | 97 | 97 | 97 | 99 | 96 |
| *selon l'invention | | | | | | | | |

On constate que la résistance en traction des échantillons préparés conformément à l'invention (n°11 et 12) est meilleure aussi bien *avant* vieillissement qu'après vieillissement, en comparaison avec des échantillons contenant moins d'époxysilane (n° 9 et 10), mais également en comparaison d'échantillons contenant une quantité équivalente d'un aminosilane (n° 7 et 8).

Comme déjà constaté à l'Exemple 1, les valeurs de reprise d'épaisseur des produits finaux semblent être indépendantes de la nature chimique et de la concentration du silane.

## Revendications

1.  Composition aqueuse d'encollage pour produits isolants à base de laine minérale, comprenant

    (a) au moins un glucide choisi parmi les sucres réducteurs, les sucres hydrogénés et un mélange de ceux-ci, la proportion de sucres hydrogénés dans le glucide étant comprise entre 25 et 100 % en poids,
    (b) au moins un acide polycarboxylique monomère ou un sel ou anhydride d'un tel acide,
    (c) plus de 2 % en poids, rapporté à la somme des composants (a) et de (b), d'au moins un époxysilane.

2.  Composition aqueuse d'encollage selon la revendication 1, **caractérisée par le fait qu'**elle contient de 2,1 à 7 % en poids, de préférence de 2,3 à 6 % en poids et en particulier de 2,5 à 5 % en poids et idéalement de 3 à 4,5 % en poids d'au moins un époxysilane, ces pourcentages étant exprimés par rapport à la somme des composants (a) et (b).

3.  Composition aqueuse d'encollage selon la revendication 1 ou 2, **caractérisée par le fait que** l'époxysilane est choisi parmi les 3-glycidaxyprapyl-trialcoxysilanes, 3-glycidoxypropyl-dialcoxy-alkylsilanes, époxycyclohexyléthyltrialcoxysilanes, époxycyclohexyléthyldialcoxyalkylsilanes, de préférence les 3-glycidoxypropyl-trialcoxysilanes.

4.  Composition aqueuse d'encollage selon l'une quelconque des revendications précédentes, **caractérisée par le fait que** le glucide contient au moins 30 % en poids, de préférence au moins 50 % en poids, et en particulier au moins 70 % en poids de sucres hydrogénés.

5.  Composition aqueuse d'encollage selon l'une des revendications précédentes, **caractérisée par le fait que** le sucre hydrogéné est choisi parmi les produits d'hydrogénation des monosaccharides, disaccharides, oligosaccharides et polysaccharides et leur mélanges.

6.  Composition aqueuse d'encollage selon l'une quelconque des revendications précédentes, **caractérisée par le fait que** le sucre hydrogéné est un produit d'hydrogénation d'un hydrolysat d'amidon.

7.  Composition aqueuse d'encollage selon l'une des revendications précédentes, **caractérisé par le fait que** l'acide polycarboxylique est l'acide citrique.

8.  Procédé de fabrication d'un produit isolant à base de fibres minérales, comprenant

- l'application d'une composition aqueuse d'encollage selon l'une quelconque des revendications précédentes sur des fibres minérales,
- l'évaporation de la phase solvant de la composition aqueuse d'encollage et le durcissement thermique du résidu non volatile de la composition.

**9.** Procédé selon la revendication 8, **caractérisé par le fait qu'**il comprend en outre une étape de préparation de la composition aqueuse d'encollage, mise en oeuvre moins de 24 heures, de préférence moins de 4 heures, en particulier moins de 1 heure avant l'étape d'application sur les fibres.

**10.** Produit isolant acoustique et/ou thermique obtenu par le procédé selon l'une des revendications 8 ou 9.


**Patentansprüche**

**1.** Wässrige Bindemittelzusammensetzung für isolierende Produkte auf Basis von Mineralwolle, umfassend

(a) mindestens ein Kohlenhydrat, ausgewählt aus reduzierenden Zuckern, hydrierten Zuckern und einem Gemisch davon, wobei der Anteil an hydrierten Zuckern im Kohlenhydrat bei 25 bis 100 Gew.-% liegt,
(b) mindestens eine monomere Polycarbonsäure oder ein Salz oder ein Anhydrid einer solchen Säure,
(c) mehr als 2 Gew.-%, bezogen auf die Summe der Bestandteile (a) und (b), von mindestens einem Epoxysilan.

**2.** Wässrige Bindemittelzusammensetzung nach Anspruch 1, **dadurch gekennzeichnet, dass** sie 2,1 bis 7 Gew.-%, bevorzugt 2,3 bis 6 Gew.-% und insbesondere 2,5 bis 5 Gew.-% und idealerweise 3 bis 4,5 Gew.-% von mindestens einem Epoxysilan enthält, wobei diese Prozentsätze im Verhältnis zur Summe der Bestandteile (a) und (b) ausgedrückt sind.

**3.** Wässrige Bindemittelzusammensetzung nach Anspruch 1 oder 2, **dadurch gekennzeichnet, dass** das Epoxysilan ausgewählt ist aus 3-Glycidoxypropyltrialkoxysilanen, 3-Glycidoxypropyldialkoxyalkylsilanen, Epoxycyclohexylethyltrialkoxysilanen, Epoxycyclohexylethyldialkoxyalkylsilanen, bevorzugt 3-Glycidoxypropyltrialkoxysilanen.

**4.** Wässrige Bindemittelzusammensetzung nach einem der vorangehenden Ansprüche, **dadurch gekennzeichnet, dass** das Kohlenhydrat mindestens 30 Gew.-%, bevorzugt mindestens 50 Gew.-% und insbesondere 70 Gew.-% an hydrierten Zuckern enthält.

**5.** Wässrige Bindemittelzusammensetzung nach einem der vorangehenden Ansprüche, **dadurch gekennzeichnet, dass** der hydrierte Zucker ausgewählt ist unter den Hydrierungsprodukten von Monosacchariden, Disacchariden, Oligosacchariden und Polysacchariden und deren Gemischen.

**6.** Wässrige Bindemittelzusammensetzung nach einem der vorangehenden Ansprüche, **dadurch gekennzeichnet, dass** der hydrierte Zucker ein Hydrierungsprodukt eines Stärkehydrolysats ist.

**7.** Wässrige Bindemittelzusammensetzung nach einem der vorangehenden Ansprüche, **dadurch gekennzeichnet, dass** die Polycarbonsäure Zitronensäure ist.

**8.** Herstellungsverfahren für ein isolierendes Produkt auf Basis von Mineralfasern, umfassend

- die Anwendung einer wässrigen Bindemittelzusammensetzung nach einem der vorangehenden Ansprüche auf Mineralfasern,
- die Verdampfung der Lösungsmittelphase der wässrigen Bindemittelzusammensetzung und das thermische Aushärten des nichtflüchtigen Rückstands der Zusammensetzung.

**9.** Verfahren nach Anspruch 8, **dadurch gekennzeichnet, dass** es darüber hinaus den Schritt der Herstellung der wässrigen Bindemittelzusammensetzung umfasst, der weniger als 24 Stunden, bevorzugt weniger als 4 Stunden, insbesondere weniger als 1 Stunde vor dem Schritt des Auftragens auf die Fasern durchgeführt wird.

**10.** Schall- und/oder wärmeisolierendes Produkt, erhalten durch das Verfahren nach einem der Ansprüche 8 oder 9.

**Claims**

1. Aqueous sizing composition for insulating products based on mineral wool, comprising

   (a) at least one saccharide chosen from reducing sugars, hydrogenated sugars and a mixture thereof, the proportion of hydrogenated sugars in the saccharide being between 25% and 100% by weight,
   (b) at least one monomeric polycarboxylic acid or a salt or anhydride of such an acid,
   (c) more than 2 % by weight, relative to the sum of the components (a) and (b), of at least one epoxysilane.

2. Aqueous sizing composition according to Claim 1, **characterized in that** it contains from 2.1% to 7% by weight, preferably from 2.3% to 6% by weight, in particular from 2.5% to 5% by weight and ideally from 3% to 4.5% by weight of at least one epoxysilane, these percentages being expressed relative to the sum of components (a) and (b).

3. Aqueous sizing composition according to Claim 1 or 2, **characterized in that** the epoxysilane is selected from 3-glycidoxypropyl-trialkoxysilanes, 3-glycidoxypropyl-dialkoxy-alkylsilanes, epoxycyclo-hexylethyltrialkoxysilanes, epoxycyclohexylethyldialkoxyalkyl-silanes, preferably 3-glycidoxypropyl-trialkoxysilanes.

4. Aqueous sizing composition according to any one of the preceding claims, **characterized in that** the saccharide contains at least 30% by weight, preferably at least 50% by weight and in particular at least 70% by weight of hydrogenated sugars.

5. Aqueous sizing composition according to any one of the preceding claims, **characterized in that** the hydrogenated sugar is chosen from the products of hydrogenation of monosaccharides, disaccharides, oligosaccharides and polysaccharides, and mixtures thereof.

6. Aqueous sizing composition according to any one of the preceding claims, **characterized in that** the hydrogenated sugar is a product of hydrogenation of a starch hydrolysate.

7. Aqueous sizing composition according to any one of the preceding claims, **characterized in that** the polycarboxylic acid is citric acid.

8. Process for manufacturing an insulating product based on mineral fibers, comprising

   - the application of an aqueous sizing composition according to any one of the preceding claims to mineral fibres,
   - the evaporation of the solvent phase of the aqueous sizing composition and thermal setting of the non-volatile residue of the composition.

9. Process according to Claim 8, **characterized in that** it also comprises a step of preparing the aqueous sizing composition, less than 24 hours, preferably less than 4 hours and in particular less than 1 hour before the step of application to the fibres.

10. Acoustic and/or heat insulating product obtained by the process according to either of Claims 8 and 9.

**EP 3 114 184 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20110223364 A
- WO 2010029266 A
- WO 2013014399 A
- WO 0196254 A1